**Europäisches Patentamt**

**European Patent Office**

**Office européen des brevets**

(11) Publication number: **0 020 150**
A1

# EUROPEAN PATENT APPLICATION

(21) Application number: **80301789.6**

(51) Int. Cl.³: **B 60 C 17/04**

(22) Date of filing: **29.05.80**

(30) Priority: **02.06.79 JP 69050/79**

(71) Applicant: **Toyo Boseki Kabushiki Kaisha, No 2-1-9, Dojimahama Kita-ku, Osaka-shi, Osaka-fu (JP)**

(43) Date of publication of application: **10.12.80 Bulletin 80/25**

(72) Inventor: **Furusawa, Hironobu, No. 16-13-C106, Sawaragi-cho, Takatsuki-shi, Osaka-fu (JP)**

(74) Representative: **BAYLISS, Geoffrey Cyril et al, BOULT, WADE & TENNANT 27 Furnival Street, London EC4A 1PQ (GB)**

(84) Designated Contracting States: **DE FR GB IT**

(54) Safety tires for automobiles.

(57) A safety tire for automobile, which comprises a tire body (A) and a number of closed hollow elements (6) of a thermoplastic synthetic resin having a tensile modulus of 200 to 30 000 kg/cm², a tensile strength of 100 kg/cm² or more, preferably 200 to 1000 kg/cm², and a tensile elongation of 10% or more, preferably 100 to 800%, said hollow elements being arranged in series along the outer circumference of a wheel rim (4) which supports the tire body. An automobile can be run on the safety tire even after the tire body is punctured.

## SAFETY TIRES FOR AUTOMOBILES

The present invention relates to a safety tire for automobiles, more particularly, a tire which is tolerant for running of an automobile even after puncture of the tire.

There have hitherto been proposed various safety tires for automobiles such as passenger cars, tracks, etc. which can be tolerant for running of automobiles for a while, for example until the next service station, even after the tire is punctured with nails etc. on the road.  For instance, there is proposed a tubeless safety tire having a double structure, wherein an inside tire of a thermoplastic elastomer having a hollow form is fitted within the tire body and the inner circumference of the inside tire is supported by a rim to which both beads of the tire body are fitted, by which the inside of the tire is divided into an outer space and an inner space (cf. Japanese Patent Publication (unexamined) No. 122,201/1976).   According to this safety tire, however, the inside tire is of hollow form, and hence, when a nail punctures the tread of the tire body and further penetrates into the wall of the inside tire, the air pressure in the inner room is also released and the tire body is wholly flattened, under which state the automobile can hardly run for a long distance.   Besides, when the inside tire is repaired, it is very troublesome to release the inside tire from the tire body.   Moreover, even when a part of the inside tire is damaged, the inside tire should wholly be replaced.

A non-puncture tire has also been proposed in which a number of flexible small air bags are arranged inside the tread of the tire body and a tube with an air valve is provided and acts on the small air bags via an encircling elastic reinforcing sheet (cf. Japanese Patent Publication (unexamined) No. 16,101/1977).   In the non-puncture tire, the small air bags are contacted under pressure with the inside of tread of the tire body by the action of the inner pressure of the tube via the elastic reinforcing sheet and further the tube is also contacted under pressure with the inside of the side wall of the tire body, and hence, a lubricant should be applied in order to reduce friction due to the contact under pressure. Moreover, when a nail punctures the tread of the tire body and penetrates into the tube through the reinforcing sheet to puncture also the tube, the tire will be flattened owing to load of the automobile, under which state the automobile can hardly run for a long distance, either.

An object of the present invention is thus to provide an improved safety tire for an automobile and which can be tolerant for running of the automobile for a while even after the tire body punctures.

A safety tire for an automobile according to the present invention comprises a tire body and a number of closed hollow elements of a thermoplastic synthetic resin having a tensile modulus of 200 to 30,000 $kg/cm^2$, a tensile strength of 100 $kg/cm^2$ or more and a tensile elongation of 10 % or more, said hollow elements being cyclicly, that is serially, arranged along the outer circumference of a rim which supports the tire body.

Thus the safety tire of the present invention contains plenty of closed hollow elements which are cyclicly, that is serially, arranged on the outer circumference of the rim, and hence, when a nail punctures the tread of the tire body and penetrates into the closed hollow element, the hollow element is also punctured, but the remaining many hollow elements are kept without any trouble and can bear to the load of automobile. As a result, the automobile can run for a certain long distance even after the tire body is punctured. Moreover, even when one hollow element is punctured, the hollow elements need not be wholly replaced, but only one hollow element punctured is replaced, and the replacement can easily be done because each hollow element has a small volume.

Some embodiments of the safety tire of the present invention are illustrated with reference to the accompanying drawings.

Figure 1 is a plane view of one embodiment of the safety tire of the present invention.

Figure 2 shows a cross sectional view taken along the line II - II in Figure 1.

Figure 3 is a cross sectional view taken along the line III - III in Figure 2.

Figure 4 is a cross sectional view like in Figure 3 of another embodiment of the present invention.

Figure 5 is a cross sectional view like in Figure 3 of a further embodiment of the present invention.

Figure 6 is a perspective view of a supporting means shown in Figure 5.

Figure 7 is a cross sectional view of a still further embodiment of the present invention.

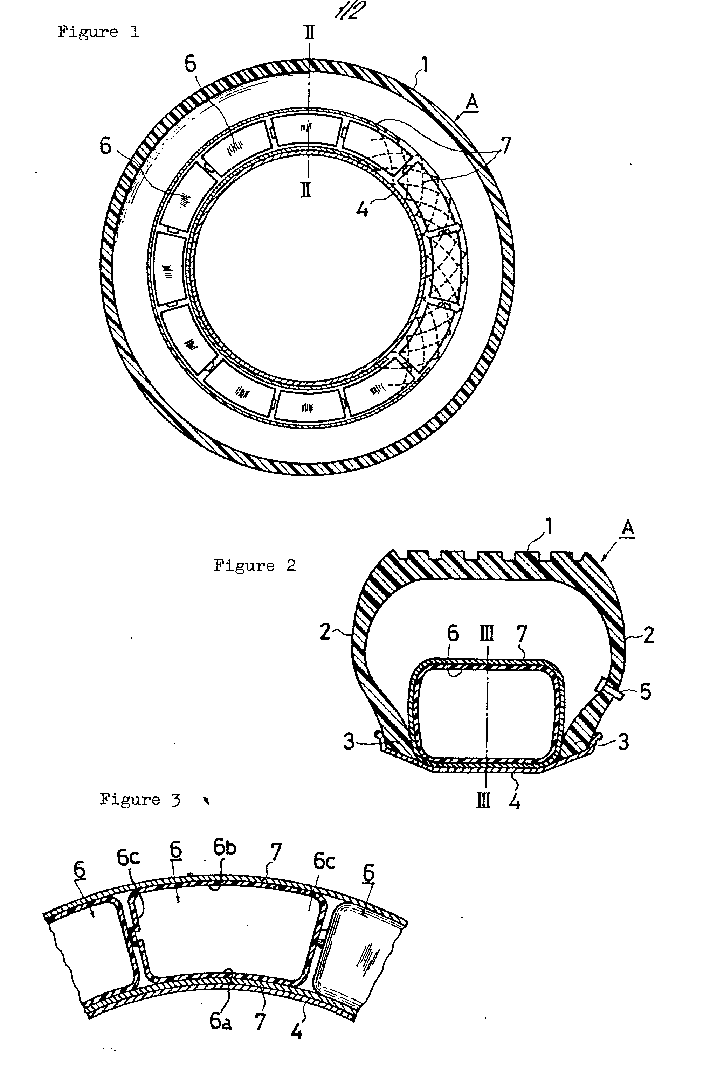

In Figures 1 to 2, (A) is a tire body which comprises a tread (1) which is reinforced with a tire cord made from a synthetic fiber or steel wire, a side wall (2) which extends both sides from the tread (1), and a bead (3), said bead (3) being reinforced with a steel wire and being fitted closely to both sides of a wheel rim (4). (5) is a valve for entering compressed air into the tire body (A). In Figure 3, (6) is a closed hollow element which is made from a thermoplastic synthetic resin. Said hollow element (6) has almost square section and is formed in such a shape that the inner circumference wall (6a) and the outer circumference wall (6b) are in an arc shape and the both side walls (6c) extend outwardly in order to make the hollow element fit around the outer circumference of the rim (4). A number of the closed hollow elements (6) are arranged closely within a hollow supporting means consisting of a net (7) and are fixed or located on the outer circumference of the rim (4).

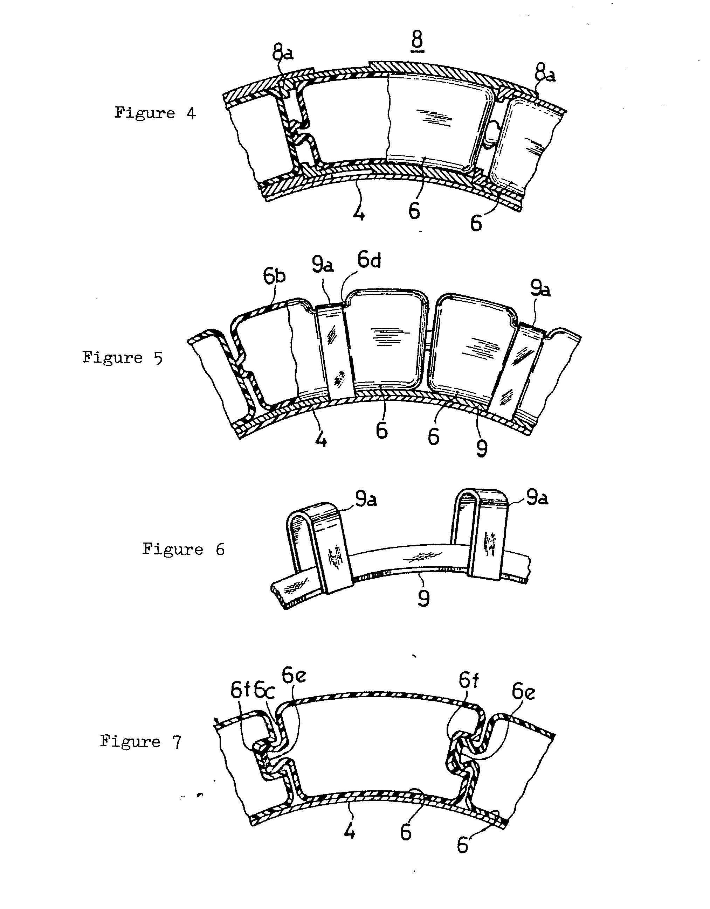

In another embodiment as shown in Figure 4, a series of supporting means is formed by connecting hollow short pipes (8) having circular shape to contain the respective hollow elements(6) and being made from an elastic material at the ends (8a, 8a) thereof. According to this embodiment, the hollow elements (6) can easily be released from or disposed in the tire body at any optional position.

In the further embodiment as shown in Figures 5 and 6, a channel (6d) is formed at the middle of the outer circumference wall (6b) of the hollow element (6), and a band (9a) is put over the channel (6d), said band (9a) being fixed in the reverse U-shape to a cyclic support (9) made of a rubberized nylon cloth, by which the hollow element (6) is fixed.

In the still further embodiment as shown in Figure 7, a convexity (6e) is formed on one side wall (6c) of the hollow element (6) and a concavity (6f) is formed on another side wall (6c). The convexity (6e) is conjugated with the concavity (6f) of the adjacent hollow element, in which manner a number of hollow elements (6) are cyclicly arranged on the outer circumference of the rim (4). In this embodiment, such a supporting means as used in the above other embodiments as shown in Figures 1 to 6 is not required.

The closed hollow element used in the present invention is not limited to the shape and the arrangement manner shown in the drawing, but may have any other shapes and may be arranged in another way. For instance, a cylindrical hollow element may be arranged on the rim so that the axis of the hollow element corresponds to the direction of the axis of the tire body.

The inner pressure of the closed hollow elements may be atmospheric pressure, but is preferably almost equal to the air pressure (e.g. about 2 $kg/cm^2$) of the tire body. When the closed hollow elements have atmospheric pressure, they can easily be arranged within the series of supporting means as in the embodiments above-mentioned. On the other hand, when the closed hollow elements have a pressure almost equal to the air pressure of the tire body, they can tolerate the load of automobile and hence the automobile can run without significant trouble even when the tire body punctures. When the hollow element is equipped with a check valve (not shown in Figures) so that air can pass through from outside into inside but not from inside to outside, the closed hollow products are easily arranged within the series supporting means, and further, when compressed air is added into the tire body, the air is also entered into the inside hollow elements via the check valve, by which the hollow elements have the same pressure as that of the tire body and can maintain the high pressure even after the tire body punctures. When the closed hollow elements equipped with a check valve are arranged within the supporting means as shown in Figure 4, the hollow short tube (8) has a small hole opened into the tire body at an appropriate position.

The closed hollow elements are arranged on the outer circumference of the rim in a number of not smaller than 4, preferably 8 to 30. The length in circumference direction of the hollow elements may be that divides equally in an integer number the circumference of the rim, but there may be used hollow elements having various different length in circumference direction so that the hollow elements can closely be arranged onto various sizes of rims by combining appropriate lengths of the hollow elements. Besides, the hollow elements may not necessarily be arranged in the state of contacting each other, but may be arranged with an appropriate interval by a suitable fixing method.

The closed hollow elements can easily be produced by forming a thermoplastic synthetic resin into a bin-like shape by blow molding and then closing the blow opening of the molded product with heat. In case of hollow elements having a comparatively large size, they may be produced by forming separately two parts in the shape that the hollow elements are divided into two parts at an appropriate position by injection molding, and then integrating them by fusing or adhering with an adhesive the openings of the two parts. In case of forming a bin-like hollow element by blow molding, blowing with drawing can give an element having an excellent toughness and durability.

The closed hollow element is made from a thermoplastic synthetic resin having a tensile modulus of 200 to 30,000 $kg/cm^2$, a tensile strength of 100 $kg/cm^2$ or more, preferably 200 to 1,000 $kg/cm^2$, and a tensile elongation of 10 % or more, preferably 100 to 800 %. (These physical properties are measured by JIS-K6301). When the thermoplastic resin has a tensile modulus of less

than 200 kg/cm$^2$, the hollow element can hardly be tolerant to the load of automobile and is flattened when the inner pressure of the hollow element is atmospheric pressure, even though the hollow element has a thicker wall. On the other hand, when the thermoplastic resin has a tensile modulus of more than 30,000 kg/cm$^2$, the inner surface of wall of the tire body is easily damaged by the hollow element during the running of automobile in punctured state because of poor elasticity of the hollow element, even though the hollow element has a thinner wall. Besides, when the thermoplastic resin has a tensile strength of less than 100 kg/cm$^2$ and a tensile elongation of less than .10 %, the hollow element is easily damaged during the running of automobile in punctured state.

The thermoplastic resin includes thermoplastic polyester rubber, thermoplastic polyurethane, thermoplastic ethylene-propylene rubber, mixed nylon, thermoplastic styrene-butadiene rubber incorporated with a reinforcement, or the like. Other materials such as fabric-filled rubbers are also usable.

Particularly suitable thermoplastic resin is the thermoplastic polyester rubber, i.e. a segmented thermoplastic polyester which consists essentially of 20 to 95 % by weight of high-melting hard segments of a polyester, a component of which can singly form a high polymer having a melting point greater than 150°C, and 80 to 5 % by weight of low melting soft polymer segments having a molecular weight between 400 to 6,000, a component of which has a melting or softening point of less than 80°C, as is disclosed in U.S. Patent 4,110,411. Examples of the component which may constitute the high-melting hard polyester segment are polyesters prepared from an aromatic dicarboxylic acid such as terephthalic acid, isophthalic acid, 1,5-naphthalene dicarboxylic acid, 2,6-naphthalene dicarboxylic acid, 4,4'-diphenyl dicarboxylic acid, bis(4-carboxyphenyl)methane, bis(4-carboxyphenyl)-sulfone, etc. or an ester thereof or a mixture thereof, and a diol such as ethylene glycol, propylene glycol, tetramethylene glycol, tetramethylene glycol, pentamethylene glycol, 2,2-dimethyl-trimethylene glycol, hexamethylene glycol, decamethylene glycol, p-xylylene glycol, cyclohexane dimethanol etc. Examples of the component which may constitute the low-melting soft polymer segment are polyalkylene ether glycols such as poly-(ethylene oxide)glycol, poly(propylene oxide)glycol, poly(tetramethylene oxide)-glycol, etc. and mixtures thereof.    Suitable examples of the segmented thermoplastic polyester are block copolymers such as polytetramethylene terephthalate - poly(tetramethylene oxide)glycol block copolymer, polytetramethylene terephthalate.isophthalate - poly(tetramethylene oxide)glycol copolymer, etc.

CLAIMS:

1. A safety tire for automobile, which comprises a tire body (A) and a number of closed hollow elements (6) formed from a thermoplastic synthetic resin having a tensile modulus of 200 to 30,000 $kg/cm^2$, a tensile strength of 100 $kg/cm^2$ or more and a tensile elongation of 10 % or more, the tire body containing a series of said hollow elements for location along the outer circumference of a rim (4) which supports the tire body.

2. A safety tire according to claim 1, wherein the thermoplastic synthetic resin of the hollow elements (6) has a tensile modulus of 200 to 30,000 $kg/cm^2$, a tensile strength of 200 to 1,000 $kg/cm^2$ and a tensile elongation of 100 to 800 %.

3. A safety tire according to claim 1 or claim 2, wherein the series of hollow elements (6) are held together by supporting means (Fig.1; 7: Fig.4; 8: Fig.5; 9: Fig.7; 6e,6f) for location on the outer circumference of the rim.

4. A safety tire according to claim 3, wherein the supporting means comprises a hollow net (7).

5. A safety tire according to claim 3, wherein the supporting means comprises a number of short elastic pipes (8,8a) connected end to end to form a supporting means, the hollow elements (6) being located within the respective pipes.

6. A safety tire according to claim 3, wherein the supporting means includes a band (9a) encircling and holding a hollow element (6).

7. A safety tire according to claim 1, wherein each hollow element (6) has a convexity (6e) on one side wall thereof and a concavity (6f) on another side wall thereof, said convexity being conjugated with said concavity of the adjacent hollow element.

8. A safety tire according to any one of claims 1, 2, 3, .4, 5, 6 or 7, wherein each hollow element (6) has a check valve so that air can pass through from outside into inside but not from inside to outside.

GCB/JC/EA203

0020150

Figure 1

Figure 2

Figure 3

Figure 4

Figure 5

Figure 6

Figure 7

European Patent
Office

**EUROPEAN SEARCH REPORT**

 Application number

EP 80 30 1789

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | GB - A - 2 004 233 (UNIROYAL) Page 2, lines 95-124 * | 1,2 | B 60 C 17/04 |
| | DE - A - 1 953 824 (CONTINENTAL) * Page 3, paragraphs 2,4; page 1, paragraph 2 * | 3-6 | |
| A | US - A - 3 574 317 (H. BREWER) | | |
| A | FR - A - 2 195 534 (UNIROYAL) | | TECHNICAL FIELDS SEARCHED (Int.Cl. 3) |
| A | FR - A - 2 147 884 (HUTCHINSON) | | |
| A | FR - A - 2 356 529 (PIRELLI) | | B 60 C 17/04 5/06 |
| A | NL - A - 97 154 (A. SEEUWEN) | | |

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search The Hague | Date of completion of the search 10-09-1980 | Examiner SCHMITT |

EPO Form 1503.1   06.78